# EUROPEAN PATENT APPLICATION

(11) **EP 3 006 609 A1**
(43) Date of publication of application: **13.04.2016**
(21) Application number: 14188306.6
(22) Date of filing: 09.10.2014
(51) Int. Cl.: D01F 6/04, D01F 1/10, D01F 6/46, D01D 5/16, C04B 16/06

(54) **Stretched polyolefin fibers**

(71) Applicant: Construction Research & Technology GmbH, 83308 Trostberg (DE)
(72) Inventor: The designation of the inventor has not yet been filed
(74) Representative: Reitstötter Kinzebach

(57) **Abstract**

The present invention relates to stretched polyolefin fibers comprising a polymer comprising at least one polymeric modifier selected from olefinic polymers modified with an acid and/or an acid anhydride, the use of these fibers in the reinforcement of cementitious compositions, and cementitious composition containing these fibers.

## Description

The present invention relates to stretched polyolefin fibers with a modified hydrophilicity, the use of these fibers in inorganic binder compositions, and inorganic binder compositions containing these fibers.

Building and construction materials based on hydraulic and non-hydraulic binders are examples where composite fibers are employed to modulate the physical properties according to specific needs. Concrete and mortar are relatively brittle materials where the tensile strength is typically much lower compared to the compressive strength of the material. Therefore, under normal circumstances concrete needs to be reinforced, usually with steel reinforcing bars. It has become increasingly popular to additionally reinforce concrete or mortar with short, randomly distributed fibers of various types to satisfy the needs of the modern building industry. The main purpose is not only to increase the toughness (resistance to cracking), but also to improve the tensile strength (crack strength) and ductility of the building materials.

Mortar is a mixture of fine aggregates with hydraulic cement, whereas concrete additionally contains coarse aggregates. The cement constituent is used as a synthetic inorganic material making up the matrix into which the aggregates are embedded. Concrete and mortar mixtures may also contain pozzolans and other admixtures commonly utilized for conventional and specialty uses, thereby modifying the physical properties of the unhardened and hardened inorganic binder compositions. Cement typically includes anhydrous crystalline calcium silicate (C₃S and C₂S), lime and alumina. In the presence of water the silicates react to form hydrates and calcium hydroxide. The hardened structure of cement depends on a three dimensional nature and complex arrangement of newly formed crystals that intrinsically depends on the quantities of the ingredients, curing time and composition of the concrete aggregates. In the course of the hardening process plastic, chemical or dewatering shrinkage may create voids causing defects and shrinkage cracks. Moreover sulfate attack in concrete and mortar often is the cause of internal pressure producing cracks in the material and in consequence destabilizes structures made of such material.

In the process of counteracting potential defects, fibers have been introduced to the inorganic binder compositions to reinforce the final matrices. Interfacial bond strength governs many important composite properties, such as overall composite strength, ductility, energy absorption property, etc. Many endeavors have been undertaken to enhance or increase the bonding capacity and compatibility at the interface of fibers to matrices in various composite materials and concrete in particular. A variety of fibers, natural and synthetic, have been used in inorganic binder compositions to increase the stability of resulting structural elements made for example from concrete mixtures. Examples for such fibers are natural materials, such as cellulose-based fibers, like cotton, viscose, hemp, jute, sisal, abaca, bamboo, cellulose, regenerated cellulose (e.g. Lyocell®), from synthetic materials like polyamide, polyester, polyacrylonitrile, polypropylene, polyethylene, polyvinyl alcohol, aramide, and polyolefines, but also from inorganic mineral or metal-based materials like carbon, glass, mineral wool, basalt, oxide ceramic and steel.

Fibers of various shapes and sizes produced from such materials are being used as stabilizers and reinforcing elements, whereby steel fibers are commonly used for most applications. However, steel introduces the problem of corrosion into cementitious compositions. Examples of commonly used synthetic fibers are polypropylene, polyethylene and polyvinyl alcohol, all of which suffer from one or more problems, such as high cost (e.g. polyvinyl alcohol), low tensile strength or low interfacial bonding (e.g. polypropylene). Fibers are usually randomly oriented in the matrix.

A limitation in the use of most fibers as reinforcement agents is a result of the low pullout strength based on poor wettability and adhesion to the matrix (low interfacial bonding) and to the cementitious material. Failure of fiber-reinforced concrete is primarily due to fiber pull-out or de-bonding. Therefore failure of fiber reinforced concrete will not occur suddenly after initiation of a crack. Since the bonding of fibers to the matrix is mainly mechanical, literature indicates that to obtain good adhesion between fiber and matrix material, it is usually necessary to carry out chemical or physical pretreatments. A variety of mechanisms is known and described in the literature and is employed to increase the interfacial bonding of fibers to inorganic binder compositions (Li V.C. et al., Advanced Cement Based Materials, 1997, vol. 6, 1-20). Increasing the fiber surface area is for example one way to increase the area of interaction between fiber and matrix. This increase in surface area enhances the mechanical bond to the matrix and can for example be achieved by fibrillation procedures. Further surface modulations of fibers have been utilized that lead to improvement of matrix-fiber interaction and mechanical bonding such as twisting, embossing, crimping and introduction of hooks into fibers.

Other means of surface modification also lead to an enhancement of adhesion between the fiber and the matrix. Plasma treatment of for example polypropylene fibers with SiCl₄ is utilized to introduce polar groups onto the surface, thereby increasing the reactivity and wettability of the fiber (US 5,705,233). This leads to an improved compatibility and bonding to the cementitious matrix and ultimately results in in an increased pull-out strength of the respective fibers. However, chloride ions, residual after plasma treatment, are likely to initialize corrosion of steel in steel containing cementitious matrices.

WO 97/32825 discloses processes for enhancing the bond strength of a cement matrix including reinforcement fibers. The reinforcement fibers are produced by a plasma treatment employing an excitable gas. However, the plasma treated fibers suffer from vanishing of the reinforcing effect of the plasma treatment over time.

Special techniques have been developed to increase the mechanical bond to the matrix and assure advantageous composite properties. The geometry of the fiber influences the bond between the fiber and matrix structure, e.g. fibers of three dimensional shape demonstrate improved bonding properties (Naaman A.E., Mcgarry F.J., Sultan, J.N. - Developments in fiber-reinforcements for concrete, Technical Report, R 72-28, School of Engineering, MIT, May 1972, p. 67).

Synthetic fibers offer a number of advantages as reinforcement agents in concrete. They present highly elastic moduli and are cheap. EP 0 225 036 discloses a method of making polypropylene fibers antistatic and thus increasing the hydrophilicity whereby the embedding of the fibers in the matrix and uniform distribution is improved. Further disclosed are methods for improving the embedding properties of polypropylene fibers by crimping, roughening or profiled shaping of the fibers.

EP 0 240 167 discloses a modifier composition for compounding with a polyolefin to produce a resin from which cement adherent polyolefin fibers may be produced. The modifier composition comprises the reaction product of a vinyl alcohol copolymer with a carboxylic acid or carboxylic acid anhydride modified polyolefin.

Specifically modified fibers may also be employed in engineered cementitious composites (ECCs). ECC, also called bendable concrete, is an easily molded cementitious composite reinforced with specially selected short random fibers, usually polymer fibers.

ECC has a variety of unique properties, including tensile properties superior to other fiber-reinforced composites, ease of processing on par with conventional cement, the use of only a small volume fraction of fibers (∼ 2%), tight crack width, and a lack of anisotropically weak planes. Unlike regular concrete, ECC has a strain capacity in the range of 3-7%, compared to 0.1 % for ordinary portland cement (OPC). ECC therefore acts more like a ductile metal than a brittle glass (as does OPC concrete), leading to a wide variety of applications. These properties are due largely to the interaction between the fibers and cementing matrix, which can be custom-tailored through micromechanics design. Essentially, the fibers create many microcracks with a very specific width, rather than a few very large cracks (as in conventional concrete.) This allows ECC to deform without severe failure.

Despite the measures employed to increase the bonding of fibers to the matrix, the utilization of individual fiber types are still limited because for high-tech and demanding applications the respective pull-out strength is still low and insufficient to satisfy the needs of high performance concrete materials. Further, individual techniques available are restricted to only limited fiber materials, i.e. solely to mineral-based, polymer-based or even only to a selected, individual material species thereby limiting the general and widespread use of individual techniques.

It would therefore be favorable to have a means at hand to easily modify and further improve the bonding characteristics of such fibers to a construction or building materials. The problem underlying the invention is therefore to provide polyolefin fibers with improved bonding characteristics and high tensile strength to construction materials based on non-hydraulic, latent hydraulic and hydraulic inorganic binders.

The problem is solved by providing a polyolefin fiber, stretched at a draw ratio of about 4:1 to about 6:1, comprising
a) 90 to 99.5 weight-% of a polyolefin, based on the weight of the polyolefin fiber; and
b) 0.5 to 10 weight-% of at least one polymeric modifier, based on the weight of the polyolefin fiber, selected from olefinic polymers comprising acid functional groups and/or acid anhydride functional groups.

A draw ratio of X:1 indicates that a section of an unstretched fiber of 1 m length is stretched in the longitudinal direction to obtain a section of stretched fiber of X m length. The polyolefin fiber of the invention is stretched at a draw ratio of about 4:1 to about 6:1, preferably about 4.5:1 to about 6:1, more preferably about 5:1 to about 6:1. Stretching may be performed upon the fiber after cooling or during or after extraction. In unstretched fibers, the molecular chains of the polymers are randomly arranged within the fiber. When the fiber is stretched while the polymer fibers solidify, the molecular chains are arranged in the direction of the draw. The heightened order of the molecular chains allows e.g. for an increased tensile strength of the fiber. Preferably, the fiber has a tensile strength at break of at least 4 gf/denier; more preferably, at least 6 gf/denier; most preferably, at least 7 gf/denier with the upper limit in general being 9 or 10 gf/denier. According to one embodiment, the fiber has a tensile strength at break of about 4 to about 9 gf/denier (320-720 MPa).

The stretching may be carried out in a single step, but it is also possible to use a multiple stretching step. By applying a multiple stretching step, in particular a two-stage stretching wherein the first stretching is performed at a lower temperature than the second, higher stretch ratios may be obtained, leading to products having higher values for stiffness and/or tensile strength. Preferably, the temperature for the first stretching is in the range of about 25 to 100 °C, especially preferred in the range of about 60 to 100 °C. Preferably, the temperature for the second stretching is in the range of about 100 to 150 °C, especially preferred in the range of about 120 to 150 °C. The mass rate is preferably in the range of about 5 to about 100 g/min, especially preferred about 50 g/min.

The fibers generally have a diameter of about 5 to about 600 µm (equivalent diameter). Microfibers, for example with a diameter from about 1 to about 300 µm, preferably about 5 to about 200 µm, are generally used to increase the ductility of mortar compositions. On the other hand, macrofibers, for example with a diameter of at least about 300 to about 1000 µm, preferably from about 300 to about 600 µm, are generally used to increase the strength of cement compositions. The impact of fibers on the stability of a building material results from the surface activity of the fibers - by adjusting the adhesion of the fibers to the building material, an ideal ratio between fiber pull-out and fiber break may be established.

In a preferred embodiment of the present invention, the polyolefin a) is a homopolymer; or a copolymer comprising at least two different types of polymerized olefin monomers selected from the group consisting of ethylene, propylene, 1-butylene, butadiene and styrene or a mixture of two or more thereof. Copolymers may for example be statistical, alternating or block copolymers.

Preferably, the polyolefin a) comprises polymerized propylene. In one embodiment, the polyolefin a) is a polypropylene homopolymer. In another embodiment, the polyolefin a) is a copolymer comprising units derived from butadiene and at least 50 weight-% units derived from propylene. Polyolefins comprising propylene units as the major component are preferred because polypropylene has the highest tensile strength among hydrocarbon polymers and propylene is inexpensive.

The polymeric modifier b) increases the hydrophilicity of the polyolefin fiber due to the high polarity of the acid functional groups (such as -CO₂H, -SO₃H or anhydride groups), thereby improving the distribution of the fiber in the inorganic binder matrix and the binding of the fiber to the inorganic binder matrix. This in turn leads to an increase in pull-out strength, ultimately strengthening the inorganic binder compositions. Fibers with a smaller specific surface, i.e., a larger diameter, generally require larger amounts of polymeric modifier to achieve the same bonding strength to inorganic binder compositions as fibers with a larger specific surface, i.e., a smaller diameter.

In a preferred embodiment of the present invention, the polymeric modifier b) comprises units with acid functional groups in an amount so that the polymeric modifier b) has an acid number in the range of 3 to 400. The acid number, i.e., the mass of potassium hydroxide (KOH) in milligrams that is required to neutralize one gram of a substance, is a measure for the amount of acidic groups, such as carboxylic, sulfonic or phosphonic acid groups, or acid anhydride groups, such as a maleic anhydride group, in a chemical compound or a mixture of compounds. In a typical procedure, a known amount of sample dissolved in organic solvent, often isopropanol, is titrated with a solution of potassium hydroxide with known concentration and with phenolphthalein as a color indicator.

The carboxylic acid and carboxylic acid anhydride are preferably selected from the group consisting of unsaturated alpha,beta-carboxylic acids and carboxylic acid anhydrides. This group comprises, e.g., acrylic acid, maleic acid, fumaric acid, itaconic acid, citraconic acid, methacrylic acid, crotonic acid, isocrotonic acid, maleic anhydride, itaconic anhydride, citraconic anhydride, and himic anhydride.

The sulfonic acid is preferably selected from the group of unsaturated alpha,betasulfonic acids. This group comprises, e.g., vinylsulfonic acid.

In a preferred embodiment of the present invention, the polymeric modifier b) is a polyolefin comprising units derived from an acid and/or units derived from an acid anhydride selected from the group consisting of maleic acid, maleic anhydride, acrylic acid, methacrylic acid and vinylsulfonic acid. More preferably, the polymeric modifier b) is a polyolefin comprising units derived from maleic anhydride.

Preferably, the polymeric modifier b) is a polyolefin comprising 0.1 to 20.0 weight-% of units derived from a carboxylic acid, units derived from a carboxylic acid anhydride, and/or units derived from a sulfonic acid, based on the weight of the polymeric modifier b). More preferably, the polymeric modifier b) is a polyolefin comprising 0.1 to 20.0 weight-% of units derived from maleic anhydride.

The modification of the olefinic polymers with an acid and/or an acid anhydride to obtain polymeric modifier b) can be achieved by procedures known to those skilled in the art, such as the reaction of polymers with units comprising acid functional groups, as described for example in US 2,973,344, US 3,161,620 and US 3,179,716. This type of modification may be referred to as "grafting". For the polymeric modifier b) thus obtained, the acid number is preferably in the range from about 3 to about 70, more preferably in the range from about 4 to about 60.

It is also possible to copolymerize polyolefin units with units comprising acid functional groups to obtain the polymeric modifier b), as described for example in US 2,640,819. In these cases, the acid number is generally significantly higher than in the cases where polymer is reacted with units comprising acid functional groups, preferably in the range from about 100 to about 400, more preferably in the range of 200 to 350.

Preferably, the polymeric modifier b) comprises about 80 to about 99.9 weight-% of unmodified units derived from at least one monomer selected from the group consisting of ethylene, propylene, 1-butylene, butadiene and styrene, based on the weight of the polymeric modifier b). In a preferred embodiment, the monomer is propylene or styrene.

The fiber may additionally comprise at least one stabilizer. Preferably, the stabilizer is chosen from hindered amine stabilizers, phenol stabilizers, organic phosphite stabilizers, organic thioether stabilizers, hindered phenols, aromatic phosphites, amines, and combinations thereof, as described in WO 2013/076124 A1. In a preferred embodiment, the fiber comprises about 0.05 to about 5.0 weight-% of at least one stabilizer, based on the weight of the polyolefin fiber.

In one embodiment of the invention, the stretched polyolefin fiber may be further mechanically shaped. Further mechanical shaping of polyolefin fibers comprises preferably the techniques of embossing, twisting, or crimping, particularly preferred is the technique of embossing. Methods for embossing, twisting, or crimping are conventional and for example disclosed in WO 2007/036058 A1 or DE 2927238 A1.

The length of the fibers suitable for use in inorganic binder compositions such as cementitious compositions is less than about 100 mm, with the preferred length being in the range from about 30 to about 55 mm, in particular about 40 mm.

An advantage of the invention is that the stretched polyolefin fibers as described above, are capable of endowing enhanced mechanical stability combined with improved and enhanced flexibility and ductility to building materials. The fibers of the invention may not only be utilized to improve or enhance flexibility and ductility of dense structures obtained after setting of inorganic binder compositions, but also may confer improved mechanical properties to porous structures or grains such as in foamed gypsum boards. Such polyolefin fiber containing compositions or structures are also understood to be "fiber-reinforced" compositions, materials or structures.

Inorganic binder compositions comprise all building materials which may be mixed with a liquid, such as water, to form a building material base substance, and to which inorganic binders, such as cement, may be added.

The term "inorganic binder" comprises hydraulic binders such as standard cements as defined by various national standards and classification systems, for example as under the European Standard EN 197 or the ASTM C150 that is used primarily in the United States of America. Any kind of inorganic binder may be used.

Further, latent hydraulic binders are also encompassed by the term "inorganic binder". Latently hydraulic binders do not bind directly when mixed with water. In order to initiate the hydration or hardening process, it is necessary to activate latent hydraulic materials in mortar or concrete formulations, for example by mixing with non-hydraulic lime, thereby forming a hydraulic cement.

Further, non-hydraulic binders are also encompassed by the term "inorganic binder". Non-hydraulic binders cannot harden underwater. Common non-hydraulic binders are high calcium or magnesium lime as well as gypsum.

In one embodiment, the invention provides an inorganic binder composition comprising from about 0.5 to about 20 vol.-% of fibers, based on the volume of the inorganic binder composition, more preferably about 1 to about 15 vol.-%, most preferably about 3 to about 12 vol.-%. In one embodiment, the inorganic binder composition is a mortar composition. In another embodiment, the inorganic binder composition is a concrete composition. Incorporating the stretched polyolefin fibers into an inorganic binder composition means mixing the fibers with all the other ingredients of said inorganic binder composition in an appropriate container.

The invention further provides an inorganic binder composition, wherein the composition is an engineered cementitious composite comprising from 0.5 to 2.0 vol.-% of fibers, based on the volume of the inorganic binder composition. The stretched polyolefin fibers have an improved tensile strength and binding of the fibers to the binder materials. The fibers may be combined with any of the substances generally used in inorganic binder compositions employed in building materials to obtain a mortar or concrete of defined properties.

When the fibers of the invention are comprised in an inorganic binder composition, the acid anhydride groups, if present, may be hydrolyzed to generate acid groups, at least on the surface of the fibers. Acid groups in turn may be partially or completely neutralized, at least on the surface of the fibers, in inorganic binder compositions.

The following figures and examples illustrate the invention without limiting it:

### Description of the Figures

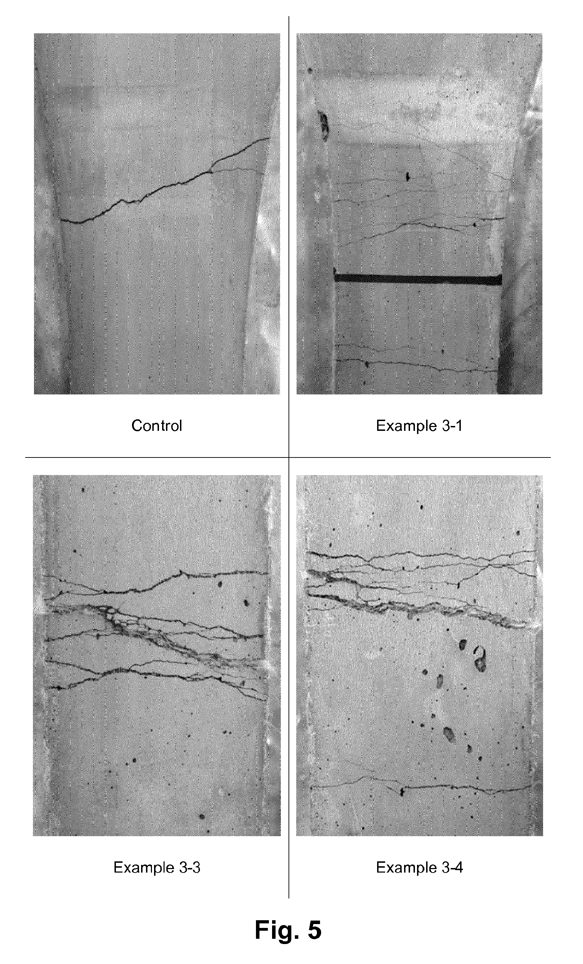

In Figure 1, graphs of the experimental comparisons of the tensile strengths of microfibers according to examples 3-1 (Fig. 1-2), 3-2 (Fig. 1-3), 3-3 (Fig. 1-4) and 3-4 (Fig. 1-5) and a control microfiber (polypropylene microfiber without polymeric modifier, Fig. 1-1) are displayed.
In Figure 2, graphs of the experimental comparison ("dog bone test") of the ductility of mortars with varying microfibers (1.85% microfiber dosage) after 7 days of curing are displayed.
In Figure 3, graphs of the experimental comparison ("dog bone test") of the ductility of mortars with varying microfibers (1.85% microfiber dosage) after 14 days of curing are displayed.
In Figure 4, graphs of the experimental comparison ("dog bone test") of the ductility of mortars with varying microfibers (1.85% or 2.82% microfiber dosage) after 14 days of curing are displayed.
In Figure 5, the multiple cracking patterns resulting from "dog bone tests" of mortars with microfibers according to examples 3-1, 3-3 and 3-4 and a control microfiber (polypropylene microfiber without polymeric modifier) are compared.

### Examples

### Example 1

In this example, the production of a fiber according to the invention is described.

Poly(styrene-co-maleic anhydride), cumene terminated (Mₙ ∼1900, determined by GPC) was obtained by copolymerization of styrene (75 wt.-%) and maleic anhydride. The acid number was in the range of 265 to 305. This polymeric modifier was incorporated into a polypropylene homopolymer flake resin (Profax 6301) with a melt flow index (MFI) of 12 g/10 min through a mixing step in a high speed Henschel-type adiabatic mixer according to the following table.

| | Blend A [weight-%] | Blend B [weight-%] |
|---|---|---|
| Poly(styrene-co-maleic anhydride), cumene terminated | 1.00 | 2.00 |
| polypropylene homopolymer flake resin (Profax 6301, LyondellBasell) | 98.65 | 97.65 |
| Phosphite antioxidant (Irgafos 168, BASF, CAS 31570-04-4) | 0.075 | 0.075 |
| Phenolic antioxidant (Irganox 3114, BASF, CAS 27676-62-6) | 0.075 | 0.075 |
| Hindered amine light stabilizer (Chimassorb 2020, BASF, CAS 192268-64-7) | 0.2 | 0.2 |

The above homogeneous mixture was extruded on a fully intermeshing co-rotating twin screw extruder, 27 mm diameter, configured for high shear and with three separate kneading zones. An ascending temperature profile from 180 °C to 200 °C in eight heated barrel zones and 230 °C for a final melt temperature was employed. The feed rate was 150 grams per minute.

The extrudate was spun through a multifilament fiber spin head (e.g. 375 holes) in case of microfiber, or a single-filament head in case of macrofiber. The spun extrudate was quenched via rapid cooling to about 25 to about 30 °C using a water bath to obtain an undrawn fiber.

Conditions on the fiber extrusion line were zone temperatures from the feed zone to the melt pump of 232 °C, 245 °C, 258 °C, and 273 °C for the melt pump (15.4 rpm) and the spinneret. The three Godet rolls were run at speeds as follows: feed 132 m/min (12 °C), draw at 728 to 806 m/min, and final at 747 to 808 m/min. The latter two rolls were not heated.

These combinations result in a high drawing ratio of 4:1 to 5:1 and a fiber diameter of 13 to 40 µm in case of microfibers and 300 to 1000 µm in case of macrofibers. The fibers are then finished - in case of the microfiber, oiled so that the fiber bundles do not stick together, and in case of the macrofiber, embossed. Embossing was performed in an embossment machine, in which the fiber is embossed at room temperature between two texturized rolls. Finally, the fibers are cut and packaged.

### Example 2

Mortar and concrete mixes were obtained according to the following procedures.

### Example 2-1

320 g Portland cement (Mergelstetten), 880 g fly ash, 150 g quartz sand (0 to 0.3 mm) 150 g quartz flour, 4.3 g superplasticiser (Melflux 2641, BASF), 0.5 g stabilizer (Melvis F 40, BASF), and 300 g water are homogenized and 7.0 g microfiber are mixed in at about 600 rpm for 3 min to obtain a mortar mix.

### Example 2-2

484 kg limestone, 1190 kg river bed sand, 446 kg type I/II cement, 36 kg densified silica fume, and 193 kg water are homogenized and 5.3 kg of macrofiber are mixed in to obtain a concrete mix. The specimen is moist cured.

### Example 3

Microfibers were obtained according to the following procedures.

### Example 3-1

Microfiber was prepared from a mixture of polypropylene with 1 weight-% polyethylene-graft-maleic anhydride (0.5 weight-% maleic anhydride, acid number 6, viscosity 500 cP (140 °C), from Sigma-Aldrich) by a procedure analogous to that of example 1.

### Example 3-2

Microfiber was prepared from a mixture of polypropylene with 1 weight-% polypropyl-ene-graft-maleic anhydride (8 to 10 weight-% maleic anhydride, MW average 9100 g/mol (GPC), acid number 47, viscosity 4.0 P (190°C), from Sigma-Aldrich) by a procedure analogous to that of example 1.

### Example 3-3

Microfiber was prepared from a mixture of polypropylene with 2 weight-% polypropylene-graft-maleic anhydride (8 to 10 weight-% maleic anhydride, MW average 9100 g/mol (GPC), acid number 47, viscosity 4.0 P (190°C), from Sigma-Aldrich) by a procedure analogous to that of example 1.

### Example 3-4

Microfiber was prepared from a mixture of polypropylene with 1 weight-% "KRATON^{®} FG1901 G Polymer" which is a linear triblock copolymer based on styrene and ethylene/butylene with a polystyrene content of 30% (1.4 to 2.0 weight-% maleic anhydride bound, melt flow index (MFI, 230 °C, 5 kg) 14 to 28 g/10 min, from Kraton Polymers U.S. LLC) by a procedure analogous to that of example 1.

### Example 4

Macrofibers were obtained according to the following procedures.

### Example 4-1

Macrofiber was prepared from a mixture polypropylene with 3 weight-% polyethylenegraft-maleic anhydride (0.5 weight-% maleic anhydride; acid number 6, viscosity 500 cP (140°C), from Sigma-Aldrich) by a procedure analogous to that of example 1.

### Example 4-2

Macrofiber was prepared from a mixture of polypropylene with 3 weight-% polypropylene-graft-maleic anhydride (8 to 10 weight-% maleic anhydride, MW average 9100 g/mol (GPC), acid number 47, viscosity 4.0 P (190°C), from Sigma-Aldrich) by a procedure analogous to that of example 1.

### Example 4-3

Macrofiber was prepared from a mixture of polypropylene with 1 weight-% "KRATON^{®} FG1901 G Polymer", which is a linear triblock copolymer based on styrene and ethylene/butylene with a polystyrene content of 30% (1.4 to 2.0 weight-% maleic anhydride bound, melt flow index (MFI, 230 °C, 5 kg) 14 to 28 g/10 min, from Kraton Polymers U.S. LLC), by a procedure analogous to that of example 1.

### Example 5

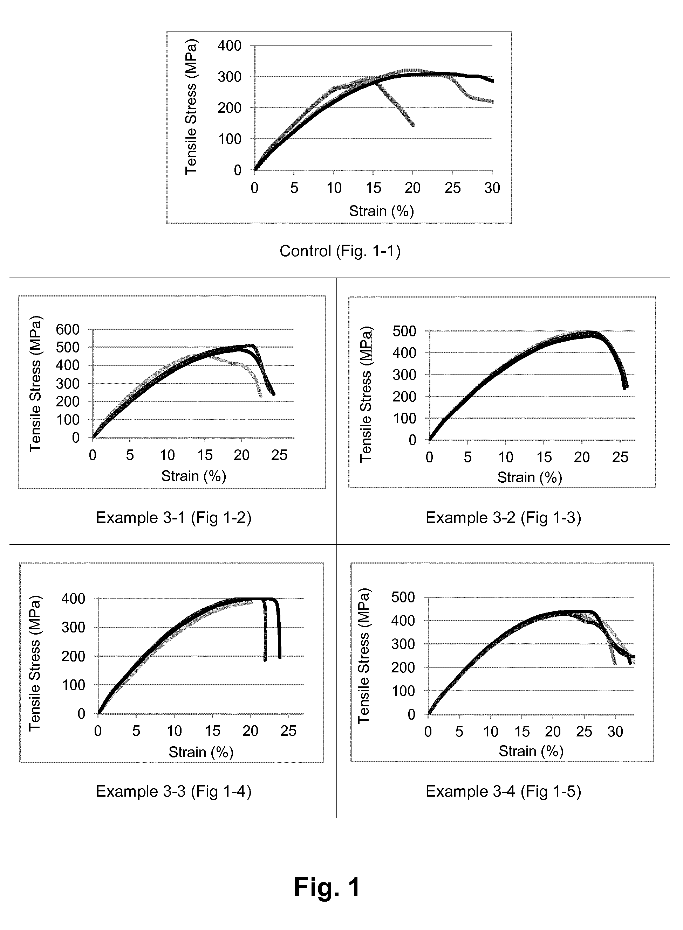

In this example, the tensile strengths of microfibers according to examples 3-1, 3-2, 3-3 and 3-4 and a control microfiber (analogous polypropylene microfiber without polymeric modifier) were tested according to ASTM C1557-03 ("Standard Test Method for Tensile Strength and Young's Modulus of Fibers"). The measurements were repeated three times each. The results are depicted in Figure 1 and show that the tensile strengths of the microfibers comprising a polymeric modifier are not significantly reduced in comparison to the high tensile strength of polypropylene microfibers without a polymeric modifier.

### Example 6

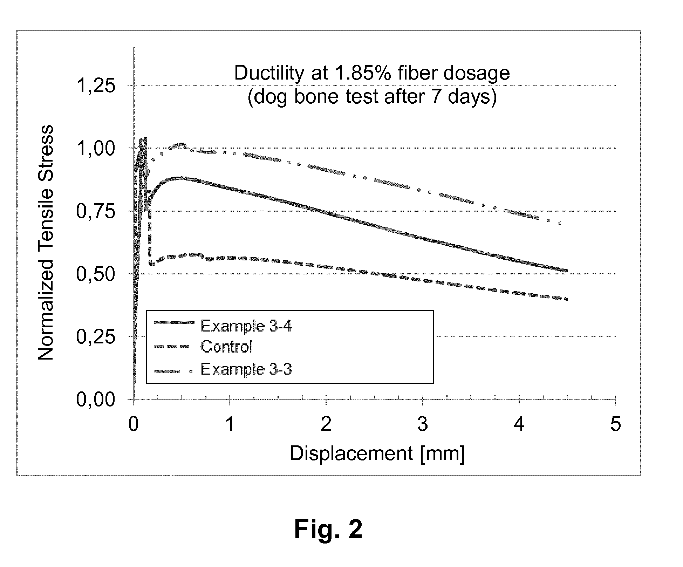

In this example, the ductility of mortars with 1.85% of microfiber 3-3 or 3-4 of the invention or 1.85% of a control microfiber (analogous polypropylene microfiber without polymeric modifier) were tested after 7 days of curing via dog bone tests (DIN EN ISO 6892-1). The results are depicted in Figure 2 and show that the ductility of mortars containing the microfibers 3-3 or 3-4 of the invention is superior to the mortar containing the control microfiber after 7 days of curing, presumably due to the improved bonding characteristics of the fibers according to the invention to inorganic binder compositions.

### Example 7

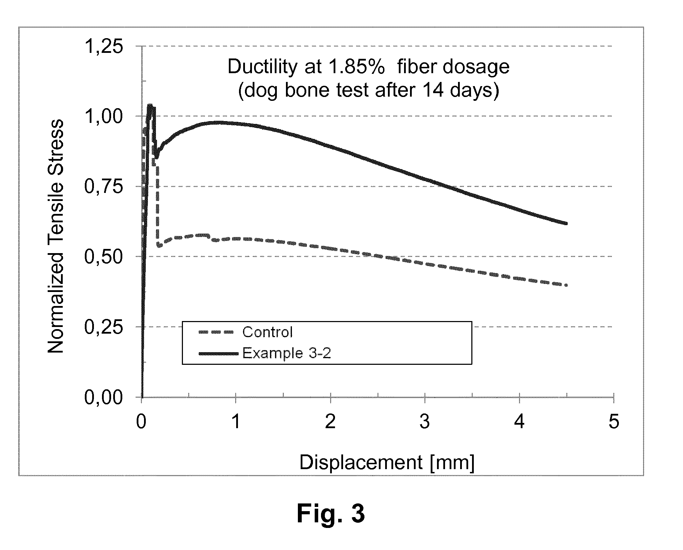

In this example, the ductility of a mortar with 1.85% of microfiber 3-2 of the invention and a mortar with 1.85% of a control microfiber (analogous polypropylene microfiber without polymeric modifier) was tested after 14 days of curing via dog bone tests (DIN EN ISO 6892-1). The results are depicted in Figure 3 and show that the ductility of mortars containing the microfiber 3-2 of the invention is superior to the mortar containing the control microfiber after 14 days of curing, presumably due to the improved bonding characteristics of the fibers according to the invention to inorganic binder compositions.

### Example 8

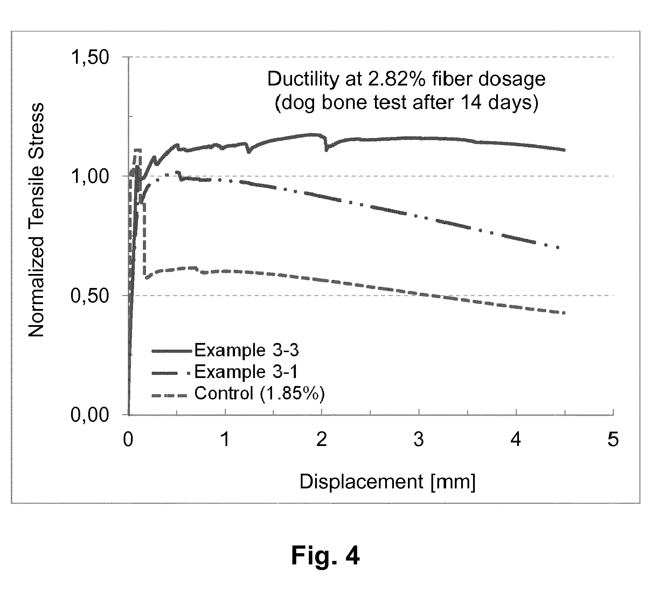

In this example, the ductility of mortars with microfiber 3-1 or 3-3 of the invention or a control microfiber (analogous polypropylene microfiber without polymeric modifier) were tested after 14 days of curing via dog bone tests (DIN EN ISO 6892-1). Microfibers 3-1 and 3-3 were contained in the mortar at a dosage of 2.82%, whereas the control microfiber dosage was 1.85%, since the control microfiber could not be dispersed at 2.82% dosage. It was thereby shown that the addition of polymeric modifier according to the invention leads to an improved dispersibility of the thus treated fibers. The results are depicted in Figure 4 and show that the ductility of mortars containing the microfibers 3-1 or 3-3 of the invention is superior to the mortar containing the control microfiber, presumably due to the improved bonding characteristics of the fibers according to the invention to inorganic binder compositions. With regard to examples 7 and 8, it was shown that an increase of the microfiber dosage leads to a further improved ductility of the thus treated mortar.

### Example 9

In this example, the multiple cracking patterns resulting from the dog bone tests of mortars with microfibers (see examples 6 to 8) according to examples 3-1, 3-3 and 3-4 and a control microfiber (analogous polypropylene microfiber without polymeric modifier) are compared. The formation of multiple cracks in the mortars is a sign of a transfer of the force applied to the contained fibers towards other parts of the mortar and indicates an increased ductility of the mortar compared to mortars showing only a single crack. It was shown that the mortars containing microfibers of the invention have a superior ductility compared to mortars containing analogous polypropylene fibers without a polymeric modifier, presumably due to the improved bonding characteristics of the fibers according to the invention to inorganic binder compositions.

### Example 10

In this example, the energy absorption of concretes containing the macrofiber 4-1, 4-2 or 4-3 according to the invention was compared to the energy absorption of the comparative macrofiber MasterFiber 246 (BASF) according to ASTM C1550-10a ("Standard Test Method for Flexural Toughness of Fiber Reinforced Concrete (Using Centrally Loaded Round Panel) 1). The results are displayed in the following table:

| Macrofiber | Energy Absorption* at 5.4 kg/m³ (Joules) | Performance relative to MasterFiber 246 |
|---|---|---|
| MasterFiber 246 | 279 | 1.00 |
| Example 4-1 | 498 | 1.78 |
| Example 4-2 | 485 | 1.74 |
| Example 4-3 | 468 | 1.68 |

It was shown that the concretes containing macrofibers according to the invention have a higher energy absorption than the concrete containing MasterFiber 246. This signifies an increased stability of the thus treated concrete, presumably due to the improved bonding characteristics of the fibers according to the invention to inorganic binder compositions.

## Claims

1. A polyolefin fiber, stretched at a draw ratio of about 4:1 to 6:1, comprising
a) 90 to 99.5 weight-% of a polyolefin; and
b) 0.5 to 10 weight-% of at least one polymeric modifier selected from olefinic polymers comprising acid functional groups and/or acid anhydride functional groups.

2. The fiber of claim 1, wherein the polyolefin a) is a homopolymer; or a copolymer comprising at least two different types of polymerized olefin monomers selected from the group consisting of ethylene, propylene, 1-butylene, butadiene and styrene or a mixture of two or more thereof.

3. The fiber of claim 2, wherein the olefin monomer of polymer a) is propylene.

4. The fiber of any one of the preceding claims, wherein the polymeric modifier b) has an acid number in the range of 3 to 400.

5. The fiber of claim 4, wherein the polymeric modifier b) is a polyolefin comprising units derived from a carboxylic acid, units derived from a carboxylic acid anhydride, and/or units derived from a sulfonic acid.

6. The fiber of claim 5, wherein the polymeric modifier b) is a polyolefin comprising units derived from maleic anhydride.

7. The fiber of claim 1, wherein the polymeric modifier b) is a polyolefin comprising 0.1 to 20.0 weight-% of units derived from a carboxylic acid, units derived from a carboxylic acid anhydride, and/or units derived from a sulfonic acid.

8. The fiber of claim 7, wherein the polymeric modifier b) is a polyolefin comprising 0.1 to 20.0 weight-% of units derived from maleic anhydride.

9. The fiber of any one of the preceding claims, wherein the polymeric modifier b) comprises 80 to 99.9 weight-% of unmodified units derived from at least one monomer selected from the group consisting of ethylene, propylene, 1-butylene, butadiene and styrene.

10. The fiber of claim 9, wherein the monomer is propylene or styrene.

11. The fiber of any one of the preceding claims having a tensile strength of at least about 4 gf/denier.

12. The use of a fiber according to any one of the preceding claims for the reinforcement of inorganic binder compositions.

13. An inorganic binder composition comprising fibers according to any one of claims 1 to 11.

14. An inorganic binder composition according to claim 13, comprising from 0.5 to 20 vol.-% of the fibers according to any one of claims 1 to 11.

15. An inorganic binder composition according to claim 13 or 12, wherein the composition is a cementitious composition.
